# EUROPÄISCHE PATENTSCHRIFT

(11) **EP 1 110 079 B1**
(45) Veröffentlichungstag und Bekanntmachung des Hinweises auf die Patenterteilung: **19.08.2009**
(21) Anmeldenummer: 00956060.8
(22) Anmeldetag: 30.06.2000
(51) Int. Cl.: G01N 27/419

(54) **ELEKTROCHEMISCHER GASSENSOR UND VERFAHREN ZUR BESTIMMUNG VON GASKOMPONENTEN**
ELECTROCHEMICAL GAS SENSOR AND METHOD FOR DETERMINING GAS COMPONENTS
CAPTEUR DE GAZ ELECTROCHIMIQUE ET PROCEDE POUR DETERMINER DES COMPOSANTS GAZEUX

(30) Priorität: 02.07.1999 DE 19930636
(43) Veröffentlichungstag der Anmeldung: 27.06.2001
(73) Patentinhaber: ROBERT BOSCH GMBH, 70442 Stuttgart (DE)
(72) Erfinder: STAHL, Roland, D-71691 Freiberg (DE); BRINZ, Thomas, D-73266 Bissingen (DE); THIEMANN-HANDLER, Sabine, D-70435 Stuttgart (DE)
(86) Internationale Anmeldenummer: PCT/DE2000/002141
(87) Internationale Veröffentlichungsnummer: WO 2001/002845

(56) Entgegenhaltungen:
- EP-A- 0 257 842
- EP-A- 0 678 740
- EP-A- 0 807 818
- EP-A- 0 892 265
- WO-A-94/02845
- US-A- 5 322 601

## Beschreibung

Die Erfindung betrifft einen elektrochemischen Gassensor und ein Verfahren zur Bestimmung von Gaskomponenten nach dem Oberbegriff der Ansprüche 1 und 10.

### Stand der Technik

Aus der EP 678 740 A1 ist ein Gassensor der gattungsgemäßen Art zur Bestimmung der NOₓ-Konzentration in einem Gasgemisch bekannt, bei dem zwei Meßgasräume mit jeweils einer Pumpzelle in einer Schichtebene eines planaren, sauerstoffionenleitenden keramischen Trägers hintereinander angeordnet sind. Das Meßgas strömt über eine erste Diffusionsöffnung in den ersten Meßgasraum ein, in dem eine erste innere Pumpelektrode angeordnet ist. Eine äußere Pumpelektrode ist dem Abgasraum direkt ausgesetzt. Die erste innere Pumpelektrode und die äußere Pumpelektrode bilden die erste Pumpzelle. Mittels der ersten Pumpzelle wird im ersten Meßgasraum ein vorbestimmter Sauerstoffpartialdruck durch Hinein- oder Herauspumpen von Sauerstoff eingestellt. Eine Konzentrationszelle (Nernst-Zelle) weist eine Meßelektrode und eine mit einer Luftatmosphäre in Verbindung stehende Referenzelektrode auf, wobei die Meßelektrode im ersten Meßgasraum angeordnet ist. Zur Einstellung eines konstanten Sauerstoffpartialdrucks im ersten Meßgasraum wird die elektrische Spannung (elektromotorische Kraft) der Konzentrationszelle mittels einer Pumpspannung der ersten Pumpzelle auf einen konstanten Wert eingeregelt. Der erste und der zweite Meßgasraum ist mit einem Verbindungskanal, der eine weitere Diffusionsöffnung darstellt, verbunden, wobei über den Verbindungskanal die auf einen konstanten Sauerstoffpartialdruck eingestellte Atmosphäre in den zweiten Meßraum diffundiert. Im zweiten Meßgasraum ist eine weitere innere Pumpelektrode angeordnet, die mit der im Luftreferenzkanal angeordneten Referenzelektrode zusammenwirkt und die zweite Pumpzelle bildet. Die weitere innere Pumpelektrode ist aus einem Material, beispielsweise aus Rhodium, ausgeführt, das eine Zersetzung von NO zu N₂ und O₂ realisiert. Der an der weiteren inneren Pumpelektrode entstehende, reduzierte Sauerstoff wird in Ionenform über eine angelegte Pumpspannung zur Referenzelektrode gepumpt und dort in die Luftatmosphäre freigesetzt. Da die Atmosphäre im ersten Meßgasraum auf einem konstanten Sauerstoffpartialdruck gehalten wird, ist der Pumpstrom zum Abpumpen des reduzierten Sauerstoffs aus dem zweiten Meßgasraum proportional zur NOₓ-Konzentration.

Der Sensorelementaufbau ist relativ kompliziert und die Meßgenauigkeit ist von vielen Faktoren wie beispielsweise der genauen Einstellung von Meßtemperatur und Sauerstoffpartialdruck abhängig.

Ein aus EP0807818 bekannter Gassensor besteht im wesentlichen aus einer ersten Pumpzelle und zwei weiteren, ebenfalls nach dem amperometrischen Meßprinzip arbeitenden Meßzellen, wobei beide amperometrischen Meßzellen nach dem gleichen Meßprinzip betrieben werden.

### Vorteil der Erfindung

Die Erfindung besteht in der Anordnung der äußeren Pumpelektrode im Meßgasraum und damit den Verzicht auf einen Luftreferenzkanal. Dies vereinfacht den Aufbau des Sensorelements wesentlich und stellt eine große Kostenersparnis dar.

### Zeichnung

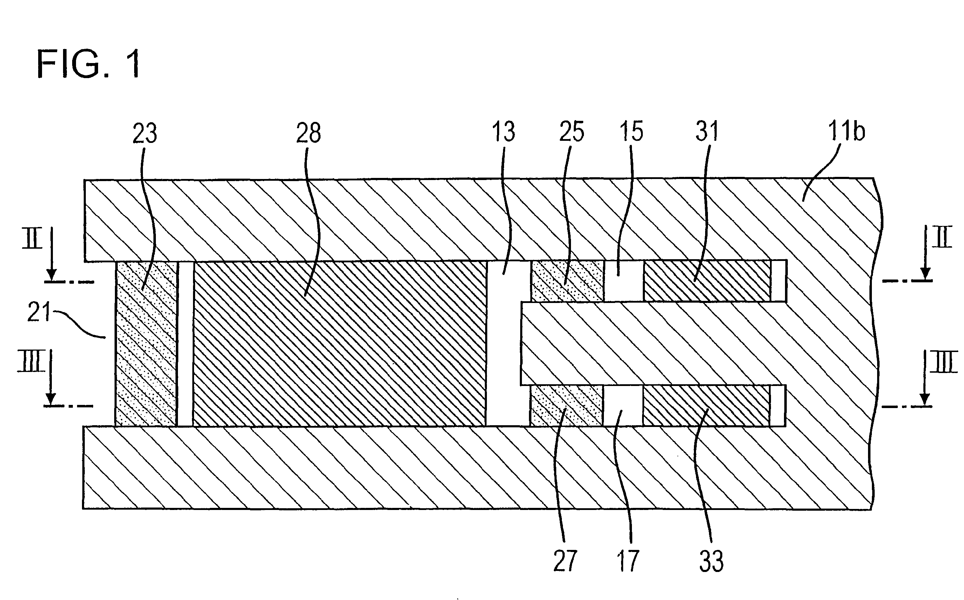

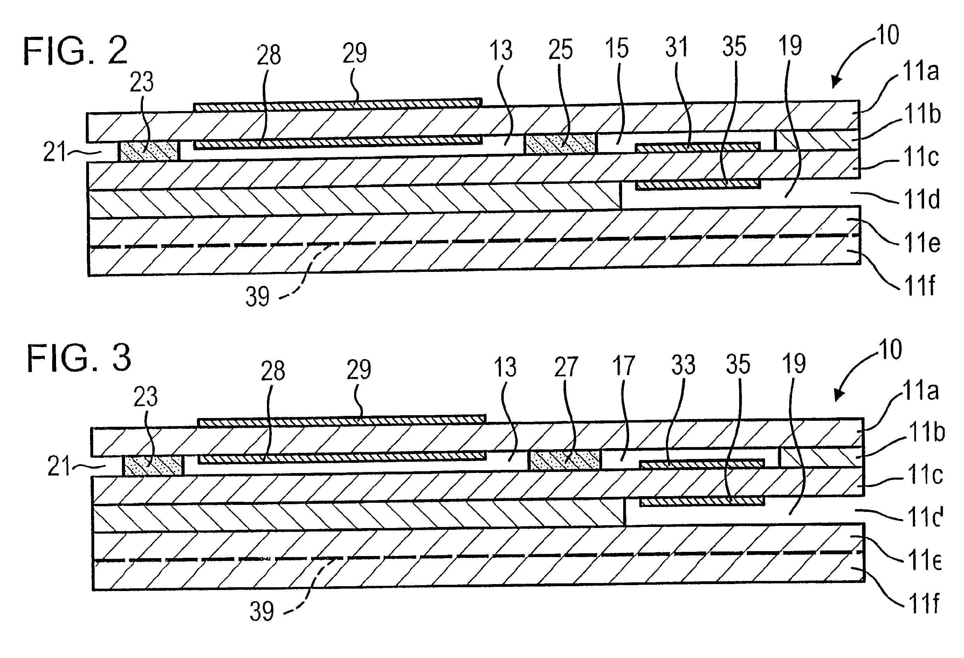

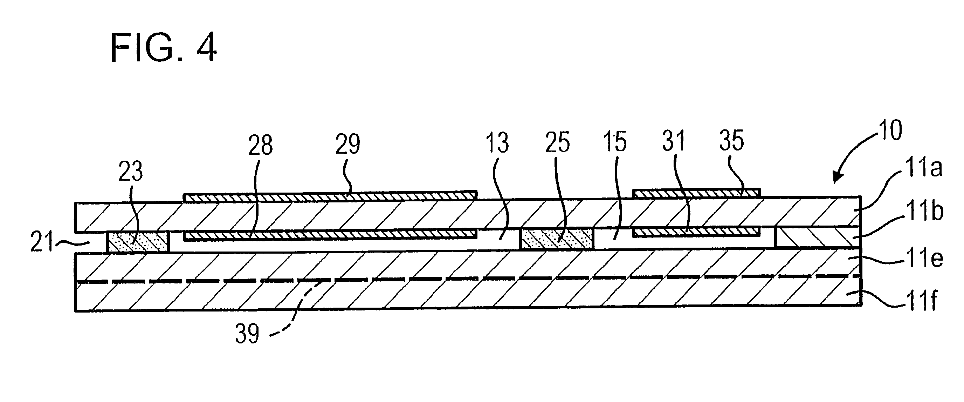

Ein herkömmlicher Gassensor ist in der Zeichnung dargestellt und in der nachfolgenden Beschreibung näher erläutert. Es zeigen Figur 1 einen Querschnitt durch die Großfläche des erfindungsgemäßen Sensorelements, Figur 2 einen Längsschnitt durch das Sensorelement gemäß der Linie II-II in Figur 1, Figur 3 einen Längsschnitt durch das Sensorelement gemäß der Linie III-III in Figur 1. Demgegenüber zeigt Figur 4 einen Längsschnitt durch das Sensorelement gemäß der Erfindung.

### Detaillierte Beschreibung

Die Figuren 1, 2 und 3 zeigen einen prinzipiellen Aufbau eines herkömmlichen Gassensors. Mit 10 ist ein planares Sensorelement eines elektrochemischen Gassensors bezeichnet, das beispielsweise eine Mehrzahl von sauerstoffionenleitenden Festelektrolytschichten 11a, 11b, 11c, 11d, 11e und 11f aufweist. Die Festelektrolytschichten 11a-11f werden dabei als keramische Folien ausgeführt und bilden einen planaren keramischen Körper. Die integrierte Form des planaren keramischen Körpers des Sensorelements 10 wird durch Zusammenlaminieren der mit Funktionsschichten bedruckten keramischen Folien und anschließendem Sintern der laminierten Struktur in an sich bekannter Weise hergestellt. Jede der Festelektrolytschichten 11a-11f ist aus sauerstoffionenleitendem Festelektrolytmaterial, wie beispielsweise stabilisiertem ZrO₂ ausgeführt.

Das Sensorelement 10 beinhaltet einen ersten Meßgasraum 13 und zwei weitere Meßgasräume 15 und 17, wobei alle drei Meßgasräume in derselben Schichtebene ausgebildet sind. Die beiden weiteren Meßgasräume 15, 17 liegen beispielsweise parallel nebeneinander und erstrecken sich ausgehend vom ersten Meßgasraum 13 jeweils kanalförmig. Unabhängig von den Meßgasräumen 13, 15 und 17 ist beispielsweise in einer weiteren Schichtebene ein Luftreferenzkanal 19 angeordnet, der an einem Ende aus dem planaren Körper des Sensorelements 10 herausführt und mit der Luftatmosphäre in Verbindung steht.

Das Sensorelement 10 hat ferner eine Gaseintrittsöffnung 21, die das Meßgas in den ersten Meßgasraum 13 leitet. Die Gaseintrittsöffnung 21 ist beispielsweise in derselben Schicht wie die Meßgasräume 13, 15 und 17 angeordnet. Am Eingang zum ersten Meßgasraum 13 ist hinter der Gaseintrittsöffnung 21 in Diffusionsrichtung des Meßgases eine erste Diffusionsbarriere 23 beispielsweise aus porösem keramischem Material ausgebildet. Zwischen den Meßgasräumen 13 und 15 sowie zwischen den Meßgasräumen 13 und 17 befindet sich in Diffusionsrichtung des Meßgases je eine weitere Diffusionsbarriere 25 und 27.

Im ersten Meßgasraum 13 ist eine erste innere Elektrode 28 angeordnet. An der äußeren, dem Meßgas unmittelbar zugewandten Seite der Festelektrolytschicht 11a befindet sich eine äußere Elektrode 29, die mit einer nicht dargestellten porösen Schutzschicht bedeckt sein kann. Im zweiten und dritten Meßgasraum 15 und 17 befindet sich je eine weitere innere Elektrode 31 und 33. Die dazugehörige gemeinsame äußere Elektrode 35 befindet sich im Luftreferenzkanal 19.

Um zu gewährleisten, daß an den Elektroden in den Meßgasräumen 13 und 15 keine Zersetzung von Gaskomponenten auftritt, bestehen die dort angeordneten Elektroden 28 und 31 beispielsweise aus einer Gold/Platin-Legierung. Im Meßgasraum 17 wird dagegen als Elektrode 33 ein Material verwendet, das beispielsweise die katalytische Zersetzung von NOₓ in Sauerstoff und Stickstoff bewerkstelligen kann. Hierfür eignet sich beispielsweise Rhodium oder eine Platin/Rhodium-Legierung. Die äußeren Elektroden 29, 35 bestehen aus einem katalytisch aktiven Material, beispielsweise aus Platin. Das Elektrodenmaterial für alle Elektroden wird dabei in an sich bekannter Weise als Cermet eingesetzt, um mit den keramischen Folien zu versintern.

In den keramischen Grundkörper des Sensorelements 10 ist ferner zwischen zwei hier nicht dargestellten elektrischen Isolationsschichten ein Widerstandsheizer 39 eingebettet. Der Widerstandsheizer dient dem Aufheizen des Sensorelements 10 auf die notwendige Betriebstemperatur. Dabei liegt an den räumlich eng benachbarten Elektroden 28, 29, 31, 33 und 35 im wesentlichen die gleiche Temperatur vor.

### Betriebsweise als NOₓ-Sensor

Bei der Verwendung des Sensorelements 10 als NOₓ-Sensor werden die äußere Elektrode 29 und die erste innere Elektrode 28 als Pumpelektroden einer ersten Pumpzelle betrieben. An diesen Elektroden wird ein Pumpstrom erzeugt, mittels dem im ersten Meßgasraum 13 durch Zu- oder Abpumpen von Sauerstoff ein konstanter Sauerstoffpartialdruck (beispielweise 1000 ppm) eingestellt wird. Die auf einen konstanten Sauerstoffpartialdruck eingestellte Meßatmosphäre im Meßgasraum 13 gelangt nun über die Diffusionsbarrieren 25 und 27 in die Meßgasräume 15 und 17. Im zweiten Meßgasraum 15 befindet sich die zweite innere Elektrode 31, die zusammen mit der Referenzelektrode 35 als zweite Pumpzelle betrieben wird. Diese Pumpzelle dient der Kontrolle des in Meßgasraum 13 eingestellten Sauerstoffpartialdrucks. Dabei wird die an den Elektroden 28 und 29 anliegende Pumpspannung derart geregelt, daß an der zweiten Pumpzelle ein konstanter Pumpstrom auftritt. Bei einem mageren Meßgas (Lambda > 1) wird von der ersten Pumpzelle Sauerstoff aus dem ersten Meßgasraum 13 herausgepumpt, bei einem fetten Meßgas (Lambda < 1) wird dagegen Sauerstoff in den ersten Meßgasraum hineingepumpt. Durch die Wahl des entsprechenden Sauerstoffpartialdrucks bzw. des Elektrodenmaterials wird sichergestellt, daß kein aus dem katalytischen Zerfall von NOₓ resultierender Sauerstoff an den Elektroden 28 und 31 abgepumpt wird.

In Meßgasraum 17 ist die dritte innere Elektrode 33 angeordnet, die zusammen mit der Referenzelektrode 35 ebenfalls als Pumpzelle betrieben wird. Dabei wirkt aufgrund des katalytischen Materials die dritte innere Elektrode 33 als NOₓ-sensitive Elektrode, an der NOₓ gemäß der Reaktion NOₓ → ½N₂ + x/2 O₂ zersetzt wird. Der dabei auftretende Pumpstrom stellt ein Maß für die Summe aus freiem und durch katalytische Zersetzung von NOₓ abgepumptem Sauerstoff dar. Durch einfache Differenzbildung der in den Meßgasräumen 15 und 17 an den Pumpzellen meßbaren Grenzströme erhält man ein der NOₓ-Konzentration proportionales Meßsignal.

Sollten bei dem oben beschriebenen Gassensor Ausgleichsströme zwischen den äußeren Elektroden 29, 35 auftreten, so müssen die entsprechenden Festelektrolytschichten durch die Einarbeitung entsprechender isolierender Zwischenschichten elektrisch unterbrochen werden. In diesem Fall können die inneren Elektroden 28, 31 und 33 zu einer durchgehenden Elektrode zusammengefaßt, d.h. über einen gemeinsamen Anschlußkontakt betrieben werden.

Die Erfindung besteht darin, die äußere Elektrode 35 nicht, wie in Figur 2 und 3 dargestellt, im Luftreferenzkanal 19 anzuordnen, sondern direkt auf der Festelektrolytschicht 11a des Sensorelements gemäß Figur 4, so daß die Elektrode 35 ebenfalls dem Meßgas ausgesetzt ist. Damit erübrigt sich die Einarbeitung des Luftreferenzkanals 19 in das Schichtsystem und der Aufbau des Sensorelements vereinfacht sich wesentlich.

## Patentansprüche

1. Elektrochemischer Gassensor zur Bestimmung der Konzentration von Gaskomponenten in Gasgemischen, insbesondere von NOx in Abgasen von Verbrennungsmotoren, mit einer Pumpzelle (28, 29) und mit zwei weiteren elektrochemischen Zellen (31, 35; 33, 35), wobei die Pumpzelle (28, 29) einen Sauerstofftransport in einen ersten Messgasraum (13) hinein bzw. heraus bewirkt und wobei das Messsignal mindestens einer der beiden weiteren elektrochemischen Zellen (31, 35; 33, 35) zur Bestimmung der Konzentration der Gaskomponente herangezogen wird, wobei die beiden weiteren elektrochemischen Zellen (31, 35; 33, 35) jeweils amperometrische Messzellen sind, und wobei eine der beiden Messzellen (31, 35) nur freien Sauerstoff und die andere Messzelle (33, 35) freien Sauerstoff sowie den aus der Zersetzung der Gaskomponente resultierenden Sauerstoff pumpt, wobei die beiden weiteren amperometrischen Messzellen jeweils auf einem Festelektrolyten angeordnete innere und äußere Pumpelektroden (31, 33, 35) aufweisen, und die inneren Pumpelektroden (31, 33) im jeweiligen Messgasraum (15, 17) angeordnet sind **dadurch gekennzeichnet dass** die äußere Pumpelektrode (35) der weiteren amperometrischen Messzellen (15, 17) in direktem Kontakt zur Messgasatmosphäre steht.

2. Gassensor nach Anspruch 1, **dadurch gekennzeichnet, daß** die beiden amperometrischen Meßzellen in einer Schichtebene eines Sensorkörpers (10) durch eine im wesentlichen gleiche Diffusionsstrecke vom ersten Meßgasraum (13) entfernt angeordnet sind und daß jeder amperometrischen Meßzelle jeweils ein weiterer Meßgasraum (15, 17) zugeordnet ist.

3. Gassensor nach Anspruch 2, **dadurch gekennzeichnet, daß** die weiteren Meßgasräume (15, 17) in einer Schichtebene parallel nebeneinander angeordnet sind.

4. Gassensor nach Anspruch 2, **dadurch gekennzeichnet, daß** der erste Meßgasraum (13) mit den beiden weiteren Meßgasräumen (15, 17) über mindestens je eine Diffusionsbarriere (25, 27) verbunden ist, über welche das Gasgemisch vom ersten Meßgasraum (13) in die anderen beiden Meßgasräume (15, 17) diffundiert.

5. Gassensor nach Anspruch 4, **dadurch gekennzeichnet, daß** der erste Meßgasraum (13) mit der äußeren Meßgasatmosphäre über mindestens eine Diffusionsbarriere (23) verbunden ist, über welche das Gasgemisch der Meßgasatmosphäre in den ersten Meßgasraum (13) diffundiert.

6. Gassensor nach Anspruch 1, **dadurch gekennzeichnet, daß** beide weiteren amperometrischen Meßzellen räumlich so angeordnet sind, daß in beiden vergleichbare Temperaturbedingungen herrschen.

7. Verfahren zur Bestimmung von Gaskomponenten in Gasgemischen mittels eines elektrochemischen Gassensors nach mindestens einem der vorhergehenden Ansprüche, **dadurch gekennzeichnet, daß** die beiden weiteren elektrochemischen Zellen als amperometrische Meßzellen betrieben werden und daß die eine der beiden weiteren Meßzellen der Messung der Sauerstoffkonzentration des Gasgemisches und die andere der beiden weiteren amperometrischen Meßzellen der Messung der Summe aus Sauerstoffkonzentration und Konzentration der zu messenden Gaskomponente im Gasgemisch dient.

8. Verfahren nach Anspruch 10, **dadurch gekennzeichnet, daß** das Meßsignal durch eine Differenz der Signale der beiden weiteren amperometrischen Meßzellen gebildet wird.

9. Verfahren nach Anspruch 10, **dadurch gekennzeichnet, daß** die beiden weiteren amperometrischen Meßzellen den Grenzstrom als Meßsignal heranziehen.

## Claims

1. Electrochemical gas sensor for determining the concentration of gas components in gas mixtures, in particular NOx in exhaust gases of internal combustion engines, having a pumping cell (28, 29) and having two further electrochemical cells (31, 35; 33, 35), the pumping cell (28, 29) causing oxygen to be transferred into and out of a first measurement gas space (13), and the measurement signal from at least one of the two further electrochemical cells (31, 35; 33, 35) being used to determine the concentration of the gas component, the two further electrochemical cells (31, 35; 33, 35) each being amperometric measuring cells, and one of the two measuring cells (31, 35) pumping only free oxygen and the other measuring cell (33, 35) pumping free oxygen and the oxygen resulting from the decomposition of the gas component, the two further amperometric measuring cells each having inner and outer pump electrodes (31, 33, 35) which are arranged on a solid electrolyte, and the inner pump electrodes (31, 33) being arranged in the respective measurement gas space (15, 17), **characterized in that** the outer pump electrode (35) of the further amperometric measuring cells (15, 17) is in direct contact with the measurement gas atmosphere.

2. Gas sensor according to Claim 1, **characterized in that** the two amperometric measuring cells are arranged in a layer plane of a sensor body (10) such that they are remote from the first measurement gas space (13) by essentially the same diffusion distance, and **in that** each amperometric measuring cell is respectively assigned a further measurement gas space (15, 17).

3. Gas sensor according to Claim 2, **characterized in that** the further measurement gas spaces (15, 17) are arranged next to one another in a parallel manner in a layer plane.

4. Gas sensor according to Claim 2, **characterized in that** the first measurement gas space (13) is connected to the two further measurement gas spaces (15, 17) via at least one respective diffusion barrier (25, 27) via which the gas mixture diffuses from the first measurement gas space (13) into the two other measurement gas spaces (15, 17).

5. Gas sensor according to Claim 4, **characterized in that** the first measurement gas space (13) is connected to the outer measurement gas atmosphere via at least one diffusion barrier (23) via which the gas mixture of the measurement gas atmosphere diffuses into the first measurement gas space (13).

6. Gas sensor according to Claim 1, **characterized in that** the two further amperometric measuring cells are spatially arranged in such a manner that comparable temperature conditions prevail in the two measuring cells.

7. Method for determining gas components in gas mixtures using an electrochemical gas sensor according to at least one of the preceding claims, **characterized in that** the two further electrochemical cells are operated as amperometric measuring cells, and **in that** one of the two further measuring cells is used to measure the oxygen concentration of the gas mixture and the other of the two further amperometric measuring cells is used to measure the sum of the oxygen concentration and the concentration of the gas component to be measured in the gas mixture.

8. Method according to Claim 7, **characterized in that** the measurement signal is formed by a difference between the signals from the two further amperometric measuring cells.

9. Method according to Claim 7, **characterized in that** the two further amperometric measuring cells use the limit current as a measurement signal.

## Revendications

1. Détecteur de gaz électrochimique destiné à déterminer la concentration de composantes gazeuses dans des mélanges gazeux, notamment de NOx dans les gaz d'échappement de moteurs à combustion interne, comprenant une cellule de pompage (28, 29) et deux cellules électrochimiques (31, 35 ; 33, 35) supplémentaires, la cellule de pompage (28, 29) réalisant un transport d'oxygène vers l'intérieur d'une première chambre à gaz de mesure (13) ou hors de celle-ci et le signal de mesure d'au moins l'une des deux cellules électrochimiques (31, 35 ; 33, 35) supplémentaires étant utilisé pour déterminer la concentration de la composante gazeuse, les cellules électrochimiques (31, 35 ; 33, 35) supplémentaires étant respectivement des cellules de mesure ampérométriques et l'une des cellules de mesure (31, 35) ne pompant que de l'oxygène libre et l'autre cellule de mesure (33,35) de l'oxygène libre ainsi que l'oxygène résultant de la décomposition de la composante gazeuse, les deux cellules de mesure ampérométriques supplémentaires présentant des électrodes de pompage (31, 33, 35) intérieures et extérieures respectivement disposées sur un électrolyte solide et les électrodes de pompage intérieures (31, 33) étant disposées dans la chambre à gaz de mesure (15, 17) correspondante, **caractérisé en ce que** l'électrode de pompage extérieure (35) des cellules de mesure ampérométriques supplémentaires (15, 17) se trouve en contact direct avec l'atmosphère à gaz de mesure.

2. Détecteur de gaz selon la revendication 1,
**caractérisé en ce que** les deux cellules de mesure ampérométriques sont disposées dans un plan de stratification d'un corps de détecteur (10) espacées de la première chambre à gaz de mesure (13) par des distances de diffusion sensiblement égales et qu'une chambre à gaz de mesure supplémentaire (15, 17) est respectivement associée à chaque cellule de mesure ampérométrique.

3. Détecteur de gaz selon la revendication 2,
**caractérisé en ce que** les chambres à gaz de mesure supplémentaires (15, 17) sont disposées parallèlement l'une à l'autre dans une couche.

4. Détecteur de gaz selon la revendication 2,
**caractérisé en ce que** la première chambre à gaz de mesure (13) est reliée avec les deux chambres à gaz de mesure supplémentaires (15, 17) à chaque fois par le biais d'au moins une barrière de diffusion (25, 27) par le biais de laquelle le mélange gazeux se diffuse de la première chambre à gaz de mesure (13) dans les deux autres chambres à gaz de mesure (15, 17).

5. Détecteur de gaz selon la revendication 4,
**caractérisé en ce que** la première chambre à gaz de mesure (13) est reliée avec l'atmosphère à gaz de mesure externe par le biais d'au moins une barrière de diffusion (23) par le biais de laquelle le mélange gazeux de l'atmosphère à gaz de mesure se diffuse dans la première chambre à gaz de mesure (13).

6. Détecteur de gaz selon la revendication 1,
**caractérisé en ce que** les cellules de mesure ampérométriques supplémentaires sont disposées dans l'espace de telle sorte que des conditions de température comparables règnent dans chacune d'elles.

7. Procédé pour déterminer la concentration de composantes gazeuses dans des mélanges gazeux au moyen d'un détecteur de gaz électrochimique selon au moins l'une des revendications précédentes, **caractérisé en ce que** les deux cellules électrochimiques supplémentaires sont utilisées comme des cellules de mesure ampérométriques et que l'une des deux cellules de mesure supplémentaires sert à mesurer la concentration d'oxygène dans le mélange gazeux alors que l'autre des deux cellules de mesure supplémentaires sert à mesurer la somme de la concentration d'oxygène et de la concentration de la composante gazeuse à mesurer dans le mélange gazeux.

8. Procédé selon la revendication 10, **caractérisé en ce que** le signal de mesure est formé par une différence des signaux des deux cellules de mesure ampérométriques supplémentaires.

9. Procédé selon la revendication 10, **caractérisé en ce que** les deux cellules de mesure ampérométriques supplémentaires utilisent le courant limite comme signal de mesure.
